# EUROPEAN PATENT APPLICATION

(11) **EP 0 793 102 A2**
(43) Date of publication of application: **03.09.1997**
(21) Application number: 97300874.1
(22) Date of filing: 11.02.1997
(51) Int. Cl.: G01P 15/08

(54) **Sensor device**

(30) Priority: 27.02.1996 GB 9604063
(71) Applicant: GEC ALSTHOM LIMITED, Rugby, Warwickshire CV21 1TB (GB); UNIVERSITY COLLEGE CARDIFF CONSULTANTS LTD., Cardiff CF1 3TE (GB)
(72) Inventor: Meydan, Turgut, Cardiff CF2 4QQ (GB); Choudhary, Praveen, Roath, Cardiff CF2 3EB (GB)
(74) Representative: Hoste, Colin Francis

(57) **Abstract**

A sensor device comprises a beam anchored at both ends to a mounting frame (31, 37) and composed of an amorphous material exhibiting a magnetostrictive effect. The beam has disposed at an intermediate point along its length a seismic mass (29), which may be magnetic or non-magnetic, and a magnetising coil (34) for imposing an alternating carrier flux upon the beam and a sensing coil (35) for sensing changes in magnetic field associated with the beam due to accelerations of an object to which the mounting frame is attached. The sensing coil may be in two sections (35a, 35b), one each side of the seismic mass, for the suppression of a transverse sensing effect. The invention also provides for the realisation of a strain-sensing device, the seismic mass being then dispensed with.

## Description

The invention relates to a sensor device for measuring acceleration or strain in an object to which the device is attached.

Sensors are commonly used to measure accelerations in vibrating bodies. Acceleration transducers, as opposed to displacement and velocity transducers, operate as "absolute" transducers, i.e. they do not require to be attached to a fixed reference mass or surface as well as to the body whose displacement or velocity is to be measured, but instead employ the principle of a seismic mass to obtain measurements of acceleration. Thus, acceleration is an absolute quantity, rather than a relative quantity.

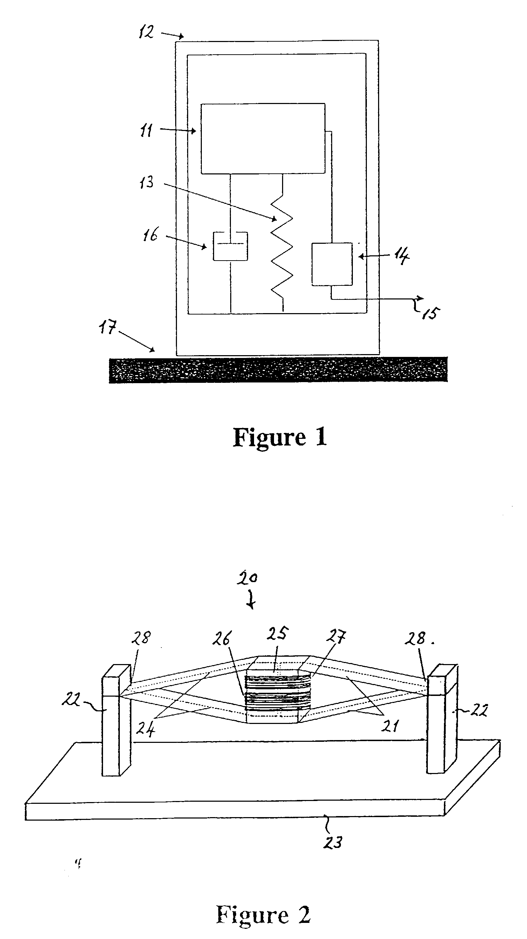

The basic principle of the seismic mass is illustrated in Figure 1. In this technique, a mass 11 is resiliently mounted on a rigid frame 12 by means of a spring 13. The frame 12 is attached to the surface of an object 17 whose accelerations are to be measured. Movements of the mass 11 relative to those of the frame 12 are registered by a transducer 14 which converts the relative accelerations of the mass 11 to an electrical signal substantially proportional to those accelerations. The signal is output along a line 15 to further processing circuitry (not shown).

Damping 16 may be provided to damp the oscillations of the mass and reduce the response time of the device.

Accelerometers exist which operate on a number of different principles; for example, there is the piezoelectric accelerometer, which takes advantage of the voltage which is induced in a crystal (e.g. quartz) when the crystal is strained, and the strain-gauge accelerometer, which is based on the fact that a conductor or a semiconductor experiences a change in electrical resistance when it is subject to strain. Both types suffer from known drawbacks: the crystal in the piezoelectric device acts like a capacitor whose strain-induced charge decays with time, making it unsuitable for static and very low-frequency measurements, also the device has a high-impedance which necessitates the use of a charge amplifier of very high input impedance; the strain-gauge device is susceptible to temperature changes and also tends to be inherently non-linear due to the fact that the "longitudinal piezoresistive coefficient" varies with applied strain.

The strain gauge types (conductor and semiconductor) just mentioned in the context of acceleration-measurement may, of course, also be used to measure strain itself and will suffer the same drawbacks in that application as have just been described in connection with the accelerometer application.

In accordance with a first aspect of the invention, there is provided a sensor device comprising a beam arrangement composed of a magnetic material exhibiting a magnetostrictive effect, the beam arrangement at two ends thereof being in contact with a mounting means intended to be attached to an object whose acceleration is to be measured, a seismic mass attached to said beam arrangement at a point intermediate said two ends, and a magnetic-field sensing means disposed such as to be able to sense changes in a magnetic field associated with said beam arrangement, said changes in magnetic field being caused by changes of stress in said beam arrangement due to accelerations of said object.

The beam arrangement may comprise a single beam member opposite ends of which are in contact with said mounting means. Alternatively, the beam arrangement may comprise two orthogonal beam members in contact at their respective ends with said mounting means, said seismic mass and said orthogonal beam members being in contact at their respective ends with said mounting means, said seismic mass and said orthogonal beam members being in contact at said intermediate point. The intermediate point may be a point approximately midway between opposite ends of the or each beam member.

The or each beam member may comprise two elongate magnetic elements clamped together at their respective ends to form two beam arms, said arms being separated by said seismic mass. Alternatively, the mounting means may comprise a pair of spatially separated support members and the or each beam member may comprise a single elongate magnetic element passed round said support members and clamped together at its ends by said seismic mass, thereby forming two beam arms. As a further alternative, the or each beam member may comprises a single elongate magnetic element clamped at its two ends by said mounting means, thereby to form a single beam arm.

The magnetic field sensing means may comprise a sensing coil wound round one of the beam arms of the or each beam member. The coil may comprise two series-connected coil sections disposed one each side of said seismic mass. As an alternative to using sections of a coil a pair of Hall-effect devices may be employed instead disposed in close proximity to the relevant beam arm.

The sensor device may comprise magnetic flux generating means for generating a magnetic flux in said beam arrangement. The flux generating means may be arranged to generate an alternating flux, a direct flux, or an alternating flux with a direct component.

The flux generating means may comprise a flux generating coil wound round one of the beam arms of the or each beam member. The coil may comprise two series-connected coil sections disposed one each side of said seismic mass. A DC flux, where such is employed, may be imposed on the beam arrangement by means of a permanent magnet instead of a coil.

The mounting means may comprise positional adjusting means for the adjustment of tension in said beam arrangement. The positional adjusting means may comprise tensioning means for imposing a quiescent tension on said beam arrangement. The tensioning means may comprise a resilient means acting to force opposite ends of the beam arrangement apart.

In accordance with a second aspect of the invention, there is provided a sensor device comprising a beam member composed of a magnetic material exhibiting a magnetostrictive effect, a mounting means attached to each end of said beam member for the securing of said device to respective points of a body strain in which is to be sensed, a magnetic flux generating means for generating a magnetic flux in said beam member, and a magnetic flux sensing means disposed such as to be able to sense changes in said magnetic flux caused by changes of strain in said body.

The beam member may comprise two elongate magnetic elements clamped together at their respective ends by said mounting means to form two beam arms, and a separating means interposed between said beam arms to maintain a separation between said elements at points other than the clamped ends. Alternatively, the mounting means may comprise a pair of spatially separated support members and said beam member may comprise a single elongate magnetic element passed round said support members and joined together at its two ends, thereby forming two beam arms. As a further alternative, the beam member may comprise a single elongate magnetic element clamped at its two ends by said mounting means, thereby forming a single beam arm.

The magnetic-field sensing means may comprise a coil wound round one of said beam arms, or a Hall-effect device positioned in close proximity to the relevant arm.

The flux generating means may be arranged to generate an alternating flux, a direct flux, or an alternating flux with a direct component. The flux generating means may comprise a coil wound round one of said beam arms and, where a DC flux is imposed on the beam member, this may be produced by means of a permanent magnet.

The magnetic material, as it is used in the sensor according to the invention, may be in ribbon or wire form and may also be an amorphous magnetic material.

The coils and coil sections used to generate or sense magnetic flux are preferably in fixed relation to the beam members around which they are wound.

In a third aspect of the invention a sensor device is provided comprising a beam arrangement composed of a magnetic material exhibiting a magnetostrictive effect, the beam arrangement being in contact with a mounting means at two ends of said beam arrangement, a magnetic-flux sensing coil being wound round said beam arrangement in fixed relation thereto. There may additionally be employed a magnetic-flux generating coil similarly wound round said beam arrangement.

Embodiments of the invention will now be described, by way of example only, with reference to the drawings, of which:
Figure 1 shows the principle of the seismic mass employed in the measurement of accelerations;
Figure 2 is a general view of a first embodiment of an accelerometer device in accordance with the invention;
Figure 3 is a general view of a second embodiment of an accelerometer device in accordance with the invention;
Figure 4 is a detailed view of the seismic mass employed in the accelerometer device shown in Figure 3;
Figure 5 is a partial view of the accelerometer device of Figure 3 showing the use of sensing- and magnetising-coil halves on opposite limbs of the beam member;
Figure 6 is a simplified plan view of the accelerometer device of Figure 3 including an orthogonally disposed further beam member;
Figure 7 is a general view of a further embodiment of an accelerometer device in accordance with the invention;
Figure 8 shows sectional views of a coil-former arrangement that may be employed in the invention;
Figure 9 shows three embodiments of a single-ended-clamped beam member;
Figure 10 shows an example of a stiffened single-ended-clamped beam member;
Figure 11 is a general view of a strain-sensing device in accordance with a further aspect of the invention;
Figure 12 is a block diagram of drive and signal processing circuitry for an accelerometer device according to the invention, and
Figure 13 shows two arrangements for establishing a quiescent tension in the magnetic beam member in a sensor device according to the invention.

A first embodiment of the accelerometer device according to the invention is illustrated in Figure 2. In Figure 2 an accelerometer device 20 comprises an amorphous beam arrangement in which a pair of amorphous ribbons 21 constitute two elongate elements making up a single beam member. The use of two beam members in such a device is described later. The ribbons are composed of a material exhibiting a high magnetomechanical coupling coefficient, e.g. amorphous Fe_{81.5}B₁₃Si_{3.5}C₂ which has a coupling coefficient of 0.95. The ribbons 21, which are approximately 10 mm in width and 20 mm in length (the drawing is not to scale), are clamped at their two ends in clamping supports 22 which are, in turn, mounted on a base 23. The base 23 is intended to be attached to a body (not shown) whose accelerations are to be measured. The ribbons are held in tension by the supports 22, at least one of which may be allowed to move along a slotted hole (not shown) in the base in order to vary the tension, the support(s) being thereafter firmly secured to the base.

Attached to the two ribbons 21 at their central portion is a soft-iron seismic mass 25. The mass 25 is approximately 10 mm wide and 5 mm high and is bonded securely to the ribbons such as to form, as shown, flat portions in the central portion of the ribbons. Around the soft-iron mass 25 are wound two coils: a magnetising coil 26 and a sensing coil 27, both of approximately 30 turns.

As shown, the accelerometer 20 is intended to register accelerations in a plane perpendicular to the base 23.

The magnetising coil 26 is supplied with an AC magnetising current at a frequency which is higher than that of an expected vibration-induced modulation signal at the terminals of the sensing coil 27. Thus, assuming the highest anticipated modulation frequency component of the sensed output to be, say, 1 kHz, the magnetising frequency will be at least 3 kHz.

Because the two ribbons are clamped together and the seismic mass 25 is composed of a magnetic material, application of the magnetising current to the coil 26 generates magnetic flux in the two halves of the ribbon arrangement, i.e. to the left and right of the mass 25, as shown by the dotted lines 24. Under quiescent conditions (no forces on the ribbons) the sensing coil will output a constant-amplitude signal at the magnetising frequency. This is by virtue of the fact that the ribbon and mass arrangement acts as a transformer with the limbs of the transformer being constituted by the lefthand and righthand halves of the ribbons.

When now the object to which the base 23 is attached experiences an acceleration in an upward or downward direction, the mass tends to remain stationary, thereby straining a corresponding one of the two ribbons 21. If the base movement is in the upward direction, the lower ribbon is placed into greater tension and the existing tension in the upper ribbon is relaxed. The opposite applies where movement of the base is in the downward direction. A change in stress in the ribbons produces a corresponding change in the permeability of the ribbon material (in fact, an increase in tension results in a decrease in permeability, i.e. an inverse magnetostrictive effect), and since the amplitude of the output signal of the sensing coil 27 is proportional to dB/dt there is a corresponding change in amplitude of the signal available at the terminals of the sensing coil. This change in amplitude can be used to provide an indication of the degree of stress experienced by the ribbons 21, which is proportional to the acceleration experienced by the object to which the device 20 is attached.

It should be noted that a DC offset will be present in the modulating component of the sensed output due to the effect of gravity acting on the ribbon arrangement. This offset can be compensated for in subsequent processing circuitry.

A disadvantage with the above-described first embodiment is the fact that the flux must flow at right angles from the seismic mass 25 into the ribbons 21 and from ribbon to ribbon at the clamped ends 28 (see Figure 2). Since the magnetic domains of the amorphous material lie predominantly along the plane of the ribbon, flux travelling normal to the ribbon is subject to high levels of reluctance, the result being a reduction in the output signal obtained from the sensing coil.

A second disadvantage is the presence of unavoidable airgaps between the mass 25 and the ribbons 21 and between the two ribbons at the clamped ends 28, this despite the action of clamping. This also increases reluctance.

A further drawback is that, since the seismic mass 25 is composed of a ferrous material, eddy currents are induced in the mass, which leads to further losses.

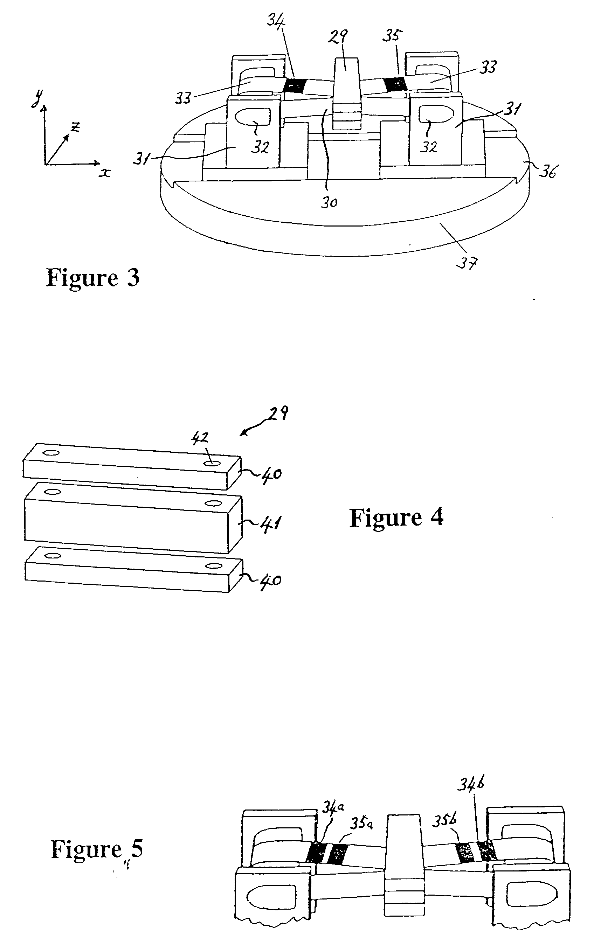

A second embodiment of the invention overcomes these drawbacks by (a) replacing the ferrous mass with a non-magnetic mass made of a plastics material, (b) employing just one ribbon clamped at its ends in the middle and (c) placing the coils on the ribbon itself rather than on the mass. This is shown in Figure 3 in which a single ribbon 30 is passed around two supports 31 and is clamped at its ends in a seismic mass arrangement 29.

The seismic mass arrangement 29 is shown in more detail in Figure 4, where it is shown to consist of three sections: top and bottom sections 40 and a middle section 41. In a preferred embodiment all sections are approximately 18 mm in length and 5 mm wide, and the middle section is approximately 6 mm thick, the outer sections 2 mm thick. Screw-threaded holes 42 are provided to allow fixing screws (not shown) to be employed to supply the clamping force on the ribbon at its two ends and also on its centre, as shown in Figure 3. It should be noted that, in view of the fact that the mass in this case is non-magnetic, the two ends of the ribbon are made to overlap so as to provide a complete magnetic circuit.

Figure 3 shows the use of support members 32 which are part of the main supports 31 and are rounded at those parts which are in contact with the ribbon 30. In practice the ribbon is tensioned by moving one or both supports 31 along a recessed portion 36 of the base 37 and, as before, securely fastening the supports to the base once the desired tension has been attained. This tensioning then determines how much of the ribbon is in contact with the support members 32. At these contact points, a means of securely fixing the ribbon to the supports is supplied. This may take the form of an adhesive, or a clamping mechanism (not shown for clarity) attached to the main supports 31 and tightened down against the ribbon at its outermost rounded portions. Wound round the ribbon 30 are two coils: a magnetising coil 34 and a sensing coil 35. These are positioned between the seismic mass and the clamped or bonded ends 33 of the ribbon arrangement. As in the first embodiment, the coils 34, 35 are interfaced with appropriate driving and signal-processing circuitry to be described later.

A disadvantage of the embodiment shown in Figure 3 is that it is sensitive to transverse accelerations of the device. It is desirable that the accelerometer device be sensitive only to accelerations in the plus and minus y directions (see co-ordinates in Figure 3) and not to movements in the x-plane or z-plane (into or out of the page). When only one sensing coil is provided, as, for example, in the second embodiment, there is no immunity to accelerations in the x-plane. This is overcome in a variant of the second embodiment of the invention by the inclusion of a second sensing coil in the opposite limb to that of the existing coil 35. This is illustrated in Figure 5, which shows only that part of the accelerometer of Figure 3 comprising the ribbon, the seismic mass and the magnetising and sensing coils. The sensing coil now consists of two coil sections 35a, 35b, each disposed next to a respective magnetising coil section 34a, 34b. Both pairs of coils are connected together in series-aiding fashion.

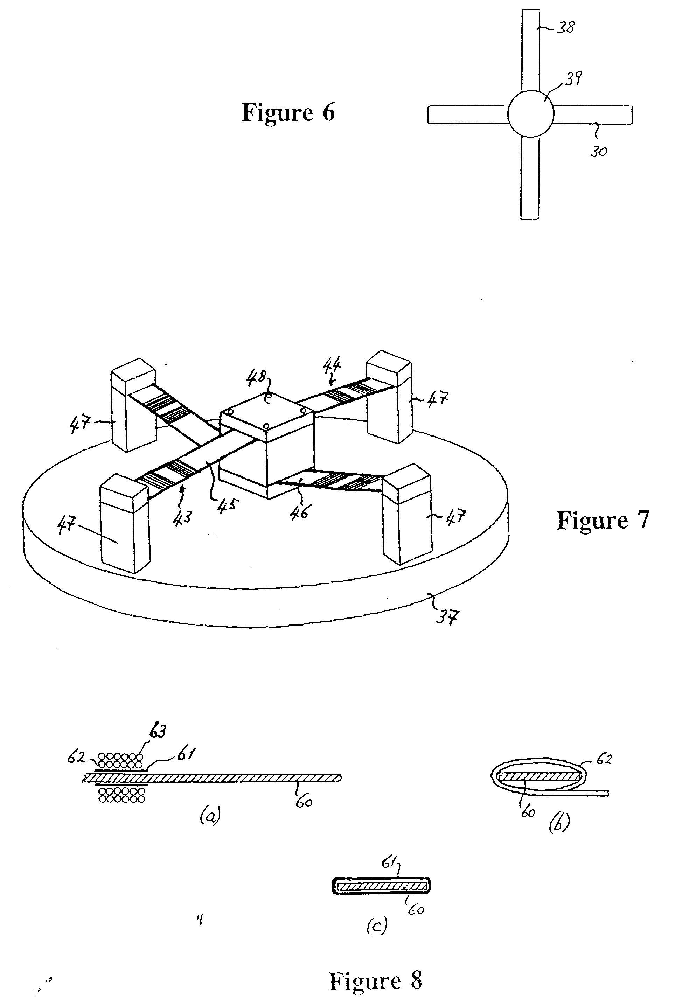

Unfortunately, this simple double-coil arrangement does not take into account possible forces acting in the z-plane. When such forces occur, twisting of the ribbon takes place as well as lateral movements thereof. A solution to this drawback is to employ a second beam member identical to the first which is disposed orthogonal to the first and shares the same seismic mass. This is illustrated in a basic plan view in Figure 6. Figure 6 shows the first beam member (the doubled-up ribbon) 30 and the second beam member (the further doubled-up ribbon) 38 at right angles to the first, both being clamped in a common seismic mass 39. This configuration reduces the possibility of twisting of the ribbon due to transverse forces. Any twisting and lateral forces that do occur can be further reduced by arranging for sensing coils to be disposed on both limbs of each ribbon. The seismic mass 39 may be circular in shape or rectangular, or any suitable shape which allows the ribbons to be clamped in their central regions. In practice, the upper limbs of the two beam members are clamped adjacent each other in the upper part of the seismic mass and the lower limbs are similarly clamped in the lower part of the seismic mass. Clamping is by screws, as in Figure 4, or by any other appropriate means.

A further embodiment of the invention is based on a recognition by the inventors that the signal in the sensing coil due to changes of stress in the amorphous ribbon arises mainly from a localised effect in the ribbon and is not dependent on the presence of a complete loop of ribbon (the demagnetising factor of the ribbon loop is high, even in the embodiment of Figure 3). This means that it is possible to use one strip of ribbon for each beam member without significant degradation of performance.

An example of this is given in Figure 7, in which the two orthogonal beam members 43, 44 comprise single ribbons 45, 46 clamped at their ends in clamps 47 attached to the mounting means 37 and at their central areas in a seismic mass 48. The seismic mass 48 is of sandwich construction, as in Figure 4, and in this realisation as shown is square in shape with its sections held together firmly against the ribbon centres by screws, though other suitable clamping means and shapes of mass may be employed.

In the arrangements of Figures 5 and 7, it is also possible to have the magnetising coils and sensing coils wound one on top of the other in pairs, i.e. a magnetising-coil section wound on top of a sensing-coil section, or vice-versa. When this option is chosen, it can be particularly advantageous to pre-wind the coil pairs on a former and then feed the former onto the ribbon before the ribbons are clamped in the supports. The benefit derived from this measure is that the former can be made to be a close fit on the ribbon, so as to provide good magnetic coupling between the sensing- and magnetising-coil sections. Figure 8a shows a longitudinal section of ribbon 60 passing through a coil former 61 on which is wound a section of sensing coil 62. On top of the sensing-coil section there is wound a section of magnetising coil 63.

The effect of the former on magnetic coupling can be seen from Figures 8(b) and 8(c). Without the use of a former, wire wound round the amorphous ribbon will tend to assume the shape shown in Figure 8(b) in which there is a sizeable gap between the central portions of the coil, viewed along the longitudinal axis of the ribbon, and a close fit only at the outer edges. In Figure 8(c), on the other hand, the former 61 and the wire (not shown) wrapped round it is pre-shaped to conform to the rectangular cross-section of the ribbon 60, the result being a close fit between the coils and the ribbon and a consequent improvement in coupling.

The arrangement of Figure 7 lends itself to the possibility of simplification of the sensor device by arranging for the two ribbon sections, and perhaps even also the seismic mass, to be fabricated as a single piece. The main problem likely to be encountered in this realisation is the extreme sensitivity of the amorphous material to physical disturbance, including cutting. The most viable processing technique in this respect appears to be that of laser cutting, since this causes least impairment to the magnetic and mechanical properties of the amorphous material.

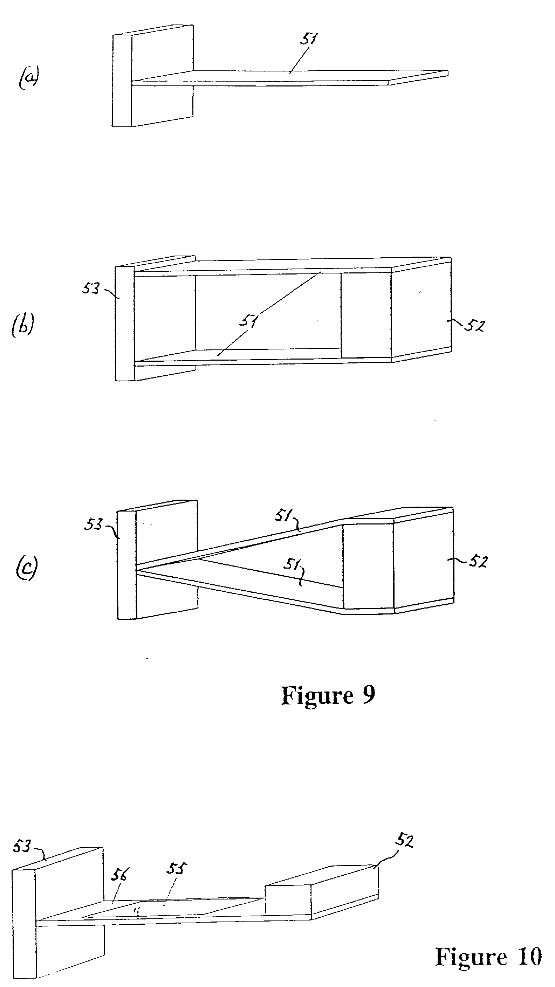

Other embodiments of the invention are also possible, including embodiments in which the ribbon is clamped only at one end. Three such embodiments are shown in Figure 9. In Figure 9(a) a single amorphous ribbon beam 51 is employed in a simple cantilever arrangement, whereas in Figures 9(b) and 9(c) two such ribbons 51 are employed separated at one end by the required seismic mass 52. The other end of the ribbons may be either clamped together at the same point on a support member 53, as in Figure 9(c), or may be maintained spaced apart, as in Figure 9(b).

A problem with all these single-end-clamped embodiments is that the amorphous material by itself is too flexible and cannot easily support the seismic mass. One way to obviate this problem is to employ a stiffening beam in conjunction with the amorphous ribbon. Figure 10 shows such an arrangement, in which an amorphous ribbon 55 is mounted on a metal beam 56 which is composed of, for example, brass, the beam 56 in turn being clamped at one end to a support 53. Attached to the other end of the beam 52 is a seismic mass 52. Now the aluminium supporting beam 56 provides the necessary stiffening and strength and also provides a linear stress/strain characteristic.

Notwithstanding the feasibility of the kinds of arrangements shown in Figure 9, it has been found that significantly better results can be obtained from ribbon arrangements which are clamped at both ends, as exemplified by the embodiments described and illustrated earlier. Such a clamping technique enables the (aluminium) stiffening beam member shown in Figure 10 to be dispensed with and also has the desired effect of raising the natural frequency of the mass-loaded amorphous ribbon arrangement.

It has so far been assumed that a magnetising flux will be imposed on the amorphous ribbon or ribbons, the flux acting as a carrier to be modulated by acceleration-induced changes in the permeability of the amorphous material. It is, however, possible to dispense with the magnetising flux, and therefore with the magnetising coil itself, and rely instead on a "passive" mode of operation of the accelerometer device (the use of a magnetising current constitutes an "active" mode of operation). In this passive mode of operation magnetic domains lying at an angle to the direction of tension in the amorphous ribbon are caused, by forces applied to the device, to rotate towards the direction of the applied stress. Rotation of these domains then induces a voltage in the sensing coil.

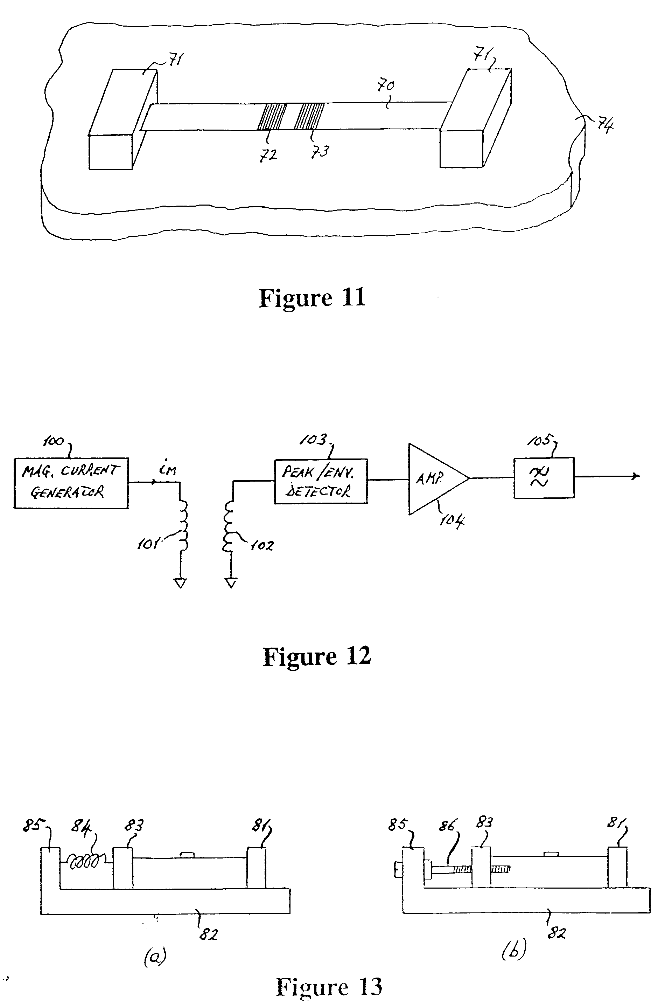

A strain-sensing device based on the magnetostrictive principle is shown in very basic form in Figure 11. This consists simply of an amorphous ribbon 70 held in tension between two clamping members 71. The ribbon 70 is provided with a pair of coils, one a sensing coil 72, the other a magnetising coil 73. The principle of this device is fundamentally the same as that of the accelerometer described above, except that this sensor requires no seismic mass. Instead, variations of permeability of the ribbon are caused by one of the clamps 71 moving either closer to or further away from the other due to changes in strain in a body 74 to which the clamps are firmly attached.

When a change occurs, the carrier signal picked up by the sensing coil 72 from the magnetising coil 73 changes in magnitude, in a sense which depends on whether the existing tension in the ribbon has increased or decreased. A particular value of strain relative to the quiescent tension in the ribbon will lead to a particular amplitude of the carrier signal appearing at the terminals of the sensing coil relative to the unstrained amplitude. This device is capable of operating from DC to a frequency determined by the natural frequency of the beam arrangement, unlike the accelerometer which cannot respond to zero frequency due to practical restrictions in the size of the seismic mass.

A typical circuit arrangement for driving the magnetising coil and processing the signal obtained from the sensing coil is shown in Figure 12. In Figure 12 a signal generator 100 generates a sinusoidal signal at, say, 100 kHz and this is used to drive the magnetising coil(s) 101 with a magnetising current i_{M}. The signal output by the sensing coil(s) 102 is first peak-detected in a peak-detector/envelope detector 103, then amplified in an amplifier 104 to provide gain, finally being filtered in a low-pass filter 105. The purpose of the envelope detector is to extract the modulation signal from the "carrier" signal arising from the magnetising current i_{M}. The output of the envelope detector is a signal which follows the amplitude of the accelerations experienced by the accelerometer device.

In both the accelerometer sensor and the strain sensor it is necessary to impose a quiescent tension on the beam arrangement in order that both positive and negative accelerations or strains may be sensed. One way to facilitate this is to employ some kind of tension biasing device, such as that shown in Figure 13(a). Figure 13(a) shows a side view of a single-beam accelerometer in which the clamping support 81 is permanently fixed to the base 82 while the support 83 is slideably attached so that it can move along a slotted hole (not shown) in the base. Attached to the support 83 is a spring 84 which is held in tension between the support and a raised portion 85 of the base 82. Use of this measure enables a technician without too much effort to adjust the tension of the ribbon to the desired amount either side of the quiescent amount, thereafter securing the support 83 to the base 82, e.g. by tightening a screw passing through the slotted hole.

An alternative method of adjusting tension is shown in Figure 13(b). Here the spring is dispensed with and instead a screw 86 is used which passes through a clearance hole in the raised portion 85 of the base 82 and through a tapped hole in the clamping support 83. Now the tension in the ribbon can be finely adjusted as desired.

Although it has been assumed that the material to be used for the beam member is in ribbon form, in practice any suitable cross-section may be employed, e.g. circular (a wire). Also, the beam member need not be amorphous, but any material which exhibits magnetostriction may be used. This includes most magnetic materials, though in practice amorphous materials have a number of significant properties which make them eminently suitable for sensing applications. These are: high magneto-mechanical coupling coefficient; high ductility, i.e. objects made from them are easily worked; very high hardness factor; high corrosion resistance; very high tensile strength (e.g. 350 kg/mm² for iron-based alloys); high values of elastic limit (e.g. 2000-2500 N/mm² for Fe-Ni and Co-based alloys); high values of bending fatigue limit (e.g. 900 N/mm² for Fe-Ni materials); susceptibility to metallic bonding and, of course, the exhibiting of a magnetostrictive effect when stressed. In particular the excellent bending fatigue performance of these materials makes them ideally suitable for use in acceleration measurement, which requires the ability to sustain prolonged dynamic loading.

Also, whereas the magnetising current through the magnetising coil is assumed to be AC, it may alternatively be DC with an AC component, or even pure DC. A DC component may be required to shift the operating point on the B/H curve of the magnetic material to an optimum working position.

## Claims

1. Sensor device comprising a beam arrangement composed of a magnetic material exhibiting a magnetostrictive effect, the beam arrangement at two ends thereof being in contact with a mounting means (22, 23; 31, 47, 37) intended to be attached to an object whose acceleration is to be measured, a seismic mass (25; 29; 48) attached to said beam arrangement at a point intermediate said two ends, and a magnetic-field sensing means (27; 35) disposed such as to be able to sense changes in a magnetic field associated with said beam arrangement, said changes in magnetic field being caused by changes of stress in said beam arrangement due to accelerations of said object.

2. Sensor device as claimed in Claim 1, in which said beam arrangement comprises a single beam member (21) opposite ends of which are in contact with said mounting means (22, 23; 31, 37).

3. Sensor device as claimed in Claim 1, in which said beam arrangement comprises two orthogonal beam members (45, 46) in contact at their respective ends with said mounting means (47; 37), said seismic mass (48) and said orthogonal beam members being in contact at said intermediate point.

4. Sensor device as claimed in Claim 2 or Claim 3, in which said intermediate point is a point approximately midway between opposite ends of the or each beam member.

5. Sensor device as claimed in Claim 4, in which the or each beam member comprises two elongate magnetic elements (21) clamped together at their respective ends to form two beam arms, said arms being separated by said seismic mass (25).

6. Sensor device as claimed in Claim 4, in which said mounting means comprises a pair of spatially separated support members (31, 32) and the or each beam member comprises a single elongate magnetic element (30) passed round said support members and clamped together at its ends by said seismic mass (29), thereby forming two beam arms.

7. Sensor device as claimed in Claim 2 or Claim 3, in which the or each beam member comprises a single elongate magnetic element clamped at its two ends by said mounting means, thereby to form a single beam arm.

8. Sensor device as claimed in any one of Claims 5 to 7, in which said magnetic-field sensing means comprises a sensing coil (27; 35) wound round one of the beam arms of the or each beam member.

9. Sensor device as claimed in Claim 8, in which said sensing coil comprises two series-connected coil sections (35a, 35b) disposed one each side of said seismic mass (29).

10. Sensor device as claimed in any one of Claims 1 to 9, comprising magnetic-flux generating means (26; 35) for generating a magnetic flux in said beam arrangement.

11. Sensor device as claimed in Claim 10, in which said flux generating means is arranged to generate an alternating flux, a direct flux, or an alternating flux with a direct component.

12. Sensor device as claimed in Claim 10 or Claim 11 as appendent to any one of Claims 5 to 7, in which said flux generating means comprises a flux generating coil (26; 34) wound round one of the beam arms of the or each beam member.

13. Sensor device as claimed in Claim 12, in which said flux generating coil comprises two series-connected coil sections (34a, 34b) disposed one each side of said seismic mass (29).

14. Sensor device as claimed in any one of Claims 11 to 13, in which said flux generating means comprises a permanent magnet.

15. Sensor device as claimed in any one of Claims 1 to 14, in which the mounting means comprises positional adjusting means (84; 86) for the adjustment of tension in said beam arrangement.

16. Sensor device as claimed in Claim 15, in which said positional adjusting means comprises tensioning means (84; 86) for imposing a quiescent tension on said beam arrangement.

17. Sensor device as claimed in Claim 16, in which said tensioning means comprises a resilient means (84) acting to force opposite ends of the beam arrangement apart.

18. Sensor device comprising a beam member (70) composed of a magnetic material exhibiting a magnetostrictive effect, a mounting means (71) attached to each end of said beam member for the securing of said device to respective points of a body, strain in which is to be sensed, a magnetic-flux generating means (73) for generating a magnetic flux in said beam member, and a magnetic-flux sensing means (72) disposed such as to be able to sense changes in said magnetic flux caused by changes of strain in said body.

19. Sensor device as claimed in Claim 18, in which said beam member comprises two elongate magnetic elements clamped together at their respective ends by said mounting means to form two beam arms, and a separating means interposed between said beam arms to maintain a separation between said elements at points other than the clamped ends.

20. Sensor device as claimed in Claim 18, in which said mounting means comprises a pair of spatially separated support members and said beam member comprises a single elongate magnetic element passed round said support members and joined together at its two ends, thereby forming two beam arms.

21. Sensor device as claimed in Claim 18, in which said beam member comprises a single elongate magnetic element (70) clamped at its two ends by said mounting means (71), thereby forming a single beam arm.

22. Sensor device as claimed in any one of Claims 19 to 21, in which said magnetic-flux sensing means comprises a coil (72) wound round one of said beam arms.

23. Sensor device as claimed in any one of Claims 19 to 22, in which said flux generating means is arranged to generate an alternating flux, a direct flux, or an alternating flux with a direct component.

24. Sensor device as claimed in any one of Claims 19 to 23, in which said flux generating means comprises a coil (72) wound round one of said beam arms.

25. Sensor device as claimed in Claim 23 or Claim 24, in which said flux generating means comprises a permanent magnet.

26. Sensor device as claimed in any one of the preceding claims, in which said magnetic material is in ribbon or wire form.

27. Sensor device as claimed in any one of the preceding claims, in which said magnetic material is an amorphous magnetic material.

28. Sensor device as claimed in any one of Claims 8, 9, 12, 13, 22 and 24 in which said coils or coil sections are in fixed relation to said beam arms.

29. Sensor device comprising a beam arrangement composed of a magnetic material exhibiting a magnetostrictive effect, the beam arrangement being in contact with a mounting means at two ends of said beam arrangement, said mounting means being intended to be attached to an object a mechanical parameter of which is to be measured, a magnetic-flux sensing coil being wound round said beam arrangement in fixed relation thereto.

30. Sensor device as claimed in Claim 29, comprising a magnetic-flux generating coil wound round said beam arrangement in fixed relation thereto.
